## Europäisches Patentamt
## European Patent Office
## Office européen des brevets

(19)

(11) Numéro de publication: **0 012 059**
**B1**

(12) # FASCICULE DE BREVET EUROPEEN

(45) Date de publication du fascicule du brevet: **16.06.82**

(51) Int. Cl.³: **G 06 K 9/18**, G 06 K 7/016

(21) Numéro de dépôt: **79400877.1**

(22) Date de dépôt: **14.11.79**

(54) **Procédé et dispositif pour l'élaboration et le traitement de deux trains d'impulsions distincts portant des informations.**

(30) Priorité: **22.11.78 FR 7832934**

(43) Date de publication de la demande:
**11.06.80 Bulletin 80/12**

(45) Mention de la délivrance du brevet:
**16.06.82 Bulletin 82/24**

(84) Etats contractants désignés:
**DE GB IT NL**

(56) Documents cités:
**FR - A - 1 295 497**

**IBM TECHNICAL DISCLOSURE BULLETIN
vol. 13, n° 11, avril 1971,
Armonk (US)
FRITZ "Minimum level control system", pages
3374—3375**

**IBM TECHNICAL DISCLOSURE BULLETIN,
vol. 15, n° 2, juillet 1972
Armonk (US)
CHANG "Analog video detector based on
multilevel contrast comparisons" pages
370—371**

(73) Titulaire: **COMPAGNIE INTERNATIONALE POUR
L'INFORMATIQUE CII - HONEYWELL BULL (dite
CII-HB)**
**94, avenue Gambetta
F-75020 Paris (FR)**

(72) Inventeur: **Maussion, Daniel
Saint-Lambert-La-Potherie
F-49000 Angers (FR)**

(74) Mandataire: **Davroux, Yves
94, Avenue Gambetta
F-75020 Paris (FR)**

Courier Press, Leamington Spa, England.

# Procédé et dispositif pour l'élaboration et le traitement de deux trains d'impulsions distincts portant des informations

L'invention concerne un procédé et un dispositif pour engendrer et traiter des impulsions transmises ensuite sur deux voies distinctes, pour extraire des informations de ces deux trains d'impulsions en leur appliquant des règles de comparaison et/ou, de coïncidence. Le but de l'invention telle qu'elle est caractérisée dans les revendications, est d'augmenter la durée de certaines impulsions, dans certaines conditions considérées comme significatives, afin de rendre plus fiable l'application des règles de comparaison et/ou de coïncidence mentionnées ci-dessus et de réduire ainsi la probabilité d'erreurs dans les informations extraites.

Dans les systèmes de logique numérique, on peut avoir à comparer les phases de deux trains d'impulsions distincts afin d'en extraire une information. Cette information se trouve donc plus ou moins codée dans les deux trains d'impulsions par le "chevauchement temporel" de certaines impulsions, c'est-à-dire la coïncidence dans le temps d'au moins une partie d'une impulsion d'un premier train pendant la durée d'une impulsion du second train.

Le problème le plus difficile à résoudre dans ce type de système provient du fait que les impulsions n'ont pas toujours une durée suffisante, ce qui rend le "chevauchement temporel" significatif assez aléatoire.

A titre d'exemple, on peut mentionner un système de lecture d'informations transcrites en code CMC7 au moyen d'une encre magnétisable. Un tel système a été largement décrit dans l'EP—A—10495 qui a été publié le 30 avril 1980. En bref, rappelons que lorsqu'un document (par exemple un chèque) porte des informations codées en CMC7 par des bâtonnets magnétisés séparés les uns des autres par des intervalles longs ou des intervalles courts, on effectue cette lecture à partir d'une double tête magnétique à deux magnétorésistances séparées d'une distance prédéterminée. Comme l'information est représentée par le nombre et l'ordre de succession des intervalles courts et longs, on analyse le "chevauchement temporel" des impulsions provenant de deux trains d'impulsion distincts engendrés à partir des deux magnétorésistances pour détecter le passage d'un intervalle long ou d'un intervalle court devant la double tête magnétique, pendant le mouvement relatif de lecture entre cette tête et le document. Si on appelle première magnétorésistance celle qui est disposée pour lire la première les bâtonnets magnétisés pendant le mouvement relatif précité et seconde magnétorésistance celle qui est disposée pour lire la même information mais en second lieu, on définit la règle suivante d'identification des deux types d'intervalle long et court:

— un intervalle long est détecté lorsqu'on enregistre un front montant d'une impulsion engendrée à partir de la première magnétorésistance pendant la présence d'une impulsion engendrée à partir de la seconde magnétorésistance.

— un intervalle court est détecté lorsqu'on enregistre un front descendant d'une impulsion engendrée à partir de la première magnétorésistance pendant la présence d'une impulsion engendrée à partir de la seconde magnétorésistance.

Par conséquent, on comprend que des erreurs d'identification puissent survenir si l'une des impulsions (ou les deux) a une durée accidentellement trop faible pour assurer le "chevauchement temporel" précité qui conditionne la détection d'un front montant ou descendant.

Or, une impulsion donnée en provenance de l'une ou l'autre des magnétorésistances peut avoir une durée très faible parce qu'elle dépend du mode de conversion analogique-numérique utilisé. Cette conversion est en effet réalisée à partir d'un circuit de commutation à seuil connecté entre chaque magnétorésistance et le reste du système. Le principe et le fonctionnement d'un tel circuit de commutation à seuil sont abondamment décrits dans l'EP—A—10495. On rappellera cependant que pour un seuil donné, les impulsions produites par le circuit de détection à seuil sont d'autant plus brèves que l'amplitude du signal analogique est faible. Inversement, pour un même niveau de signal analogique, plus le seuil est haut plus les impulsions résultantes sont brèves. Enfin, il ne faut pas perdre de vue le fait que plus le seuil est bas plus le circuit de commutation correspondant est sensible à des informations parasites (telle que la présence de taches d'encre magnétisable sur le document, etc. . . ).

L'invention, telle qu'elle est caractérisée dans les revendications, permet de sortir de ce dilemme dans la mesure où on choisit constamment entre deux valeurs de seuil possibles en ne prenant en compte les signaux fournis par le circuit de commutation à seuil bas (fournissant les impulsions de plus grande durée) que lorsqu'on est sûr que ces signaux sont significatifs.

Plus précisément, l'invention concerne un procédé d'élaboration et de traitement d'impulsions représentatives d'informations, lesdites impulsions étant générées à partir de deux sources de signal analogique pseudopériodique distinctes et transmises sur deux voies de traitement numérique en vue d'appliquer des règles de comparaison et/ou de coïncidence entre les impulsions des deux voies et en déduire lesdites informations, du type dans lequel deux séries d'impulsions distinctes, transmises chacune sur l'une respective desdites voies, sont engendrées, à partir d'un signal analogique précité respectif, par commutations entre deux niveaux de tension, ces commutations étant commardées par le signe de la différence entre la valeur instantanée de chaque anternance significative dudit signal analogique et l'un respectif de deux seuils prédéterminés associés chacun à l'une respective desdites voies, l'un de ces seuils étant un seuil haut et l'autre étant un seuil bas, chaque impulsion de la série associée au seuil bas étant ainsi engendrée avant l'impulsion analogique de la série associée au seuil haut et persistant après la disparition de ladite impulsion analogique, ledit procédé étant caractérisé en ce que, sur chaque voie, on génère une impulsion pour chaque couple d'impulsions desdites deux séries pendant un intervalle de temps commençant, soit avec le front avant de l'impulsion du couple associée au seuil bas si ce front est engendré pendant la présence d'une impulsion sur l'autre voie, soit avec le front avant de l'impulsion dudit couple associée au seuil haut dans le cas contraire, et se terminant toujours avec le front arrière de l'impulsion de ce couple qui est associé au seuil bas.

On rappelle que dans le cas du code CMC7 lu par magnétorésistance, les alternances significatives du signal analogique sont celles qui correspondent à l'alternance centrale unique de chaque réponse individuelle à chaque bâtonnet magnétisé.

L'invention concerne aussi un dispositif d'élaboration et de traitement d'impulsions représentatives d'informations pour la mise en oeuvre du procédé indiqué ci-dessus, caractérisé en ce que ledit dispositif a deux entrées connectées à deux sources de signal analogiques pseudopériodique distinctes et deux sorties destinées à être reliées à deux voies de traitement numérique conçues pour appliquer des règles de comparaison et/ou de coïncidence entre les impulsions transmises sur les deux voies et en déduire lesdites informations, que l'une des deux entrées de ce dispositif est reliée à deux circuits de commutation à seuil réglés respectivement sur un seuil haut et un seuil bas, que la sortie du circuit de commutation à seuil haut est reliée à une entrée d'horloge d'un moyen formant bascule bistable, que la sortie du circuit de commutation à seuil bas est reliée, d'une part à une première entrée d'une première porte, du type NON-ET à deux entrées, d'autre part à une première entrée d'une seconde porte, du type NON-ET à deux entrées, que la sortie de cette première porte est reliée à une entrée de forçage dudit moyen formant bascule bistable, que la sortie de cette seconde porte est reliée, par l'intermédiaire d'un inverseur, à une entrée de remise à zéro dudit moyen formant bascule bistable, que l'autre entrée de cette seconde porte est reliée à une source d'impulsions de remise à zéro générale, ces deux portes et cet inverseur constituant un circuit combinatoire, une sortie dudit moyen formant bascule bistable étant reliée à l'une des deux sorties précitées destinées à être reliées auxdites voies de traitement numérique, tandis que l'autre de ces deux sorties est reliée à la seconde entrée de ladite première porte, et que l'autre entrée dudit dispositif est aussi reliée à deux autres circuits de commutation à seuil reliés à un autre circuit combinatoire et à un autre moyen formant bascule bistable, interconnectés de façon analogue.

L'invention sera mieux comprise et d'autres buts, détails et avantages de celle-ci apparaîtront mieux à la lumière de la description explicative qui va suivre donnée uniquement à titre d'exemple et faite en référence aux dessins non limitatifs annexés dans lesquels:

— la figure 1 est un schéma d'un circuit électronique mettant en oeuvre le procédé selon l'invention; et

— la figure 2 représente un chronogramme illustrant à la fois le procédé énoncé ci-dessus et le fonctionnement du dispositif de la figure 1.

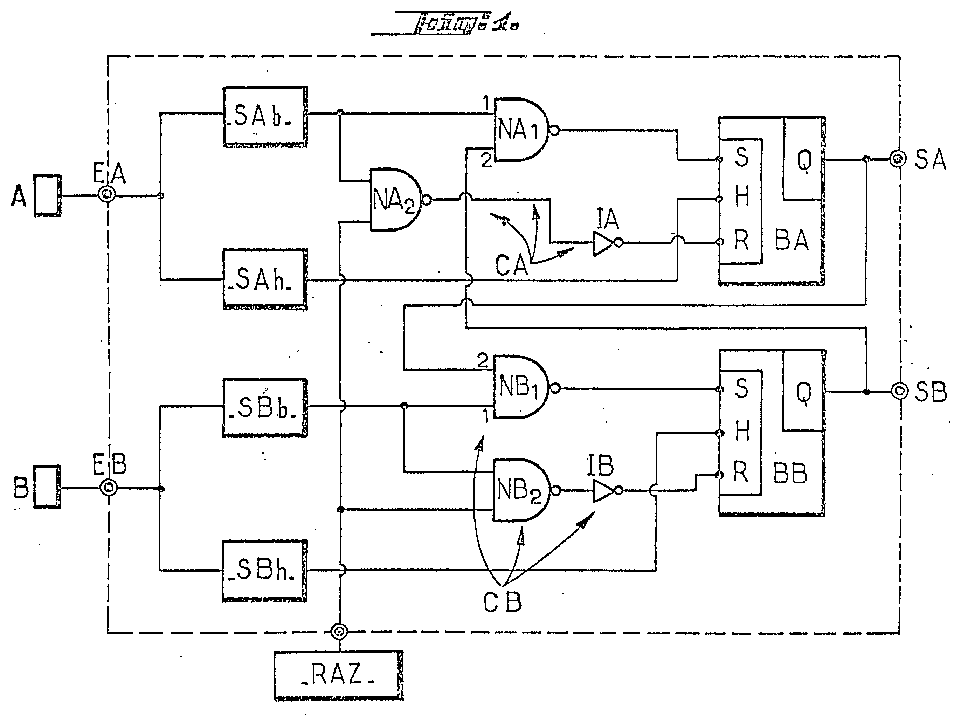

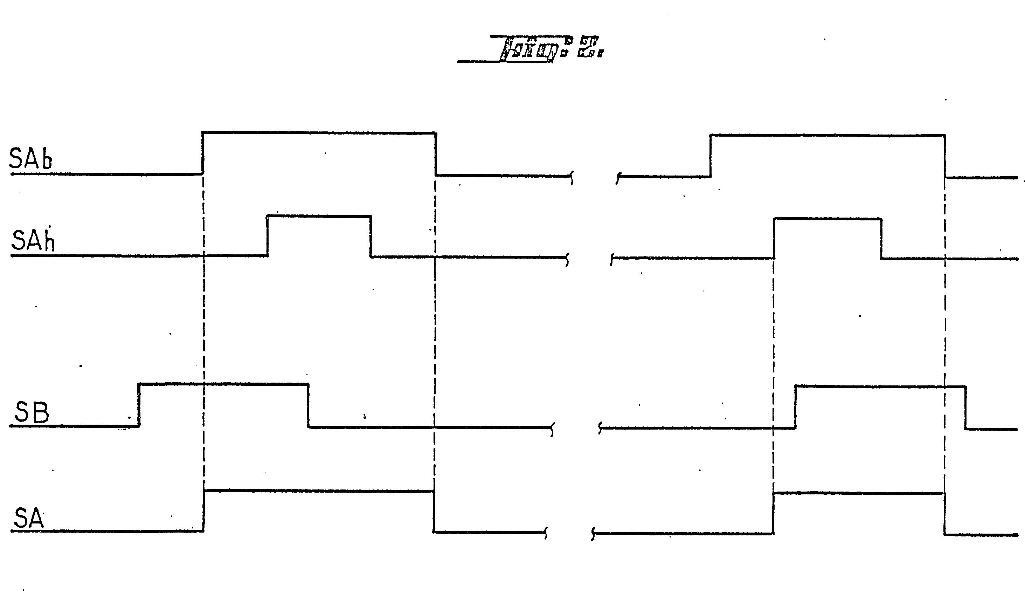

En se référant aux figures 1 et 2, un dispositif selon l'invention comporte deux entrées EA et EB et deux sorties SA, SB. Les entrées EA et EB sont connectées respectivement à deux sources de signal analogique constituées ici par deux magnétorésistances A et B (munies de leurs moyens d'alimentation en courant continu, non représentés) séparées d'une certaine distance et agencées dans un système permettant de créer un mouvement relatif entre ces deux magnétorésistances et un document (notamment un chèque) portant des informations codées en CMC7, par une encre magnétisée. Les sorties SA et SB sont destinées à être connectées à deux voies de traitement numérique conçues pour appliquer des règles de comparaison et/ou de coïncidence entre les impulsions transmises aux sorties SA et SB et en déduire les informations décodées. Ainsi, dans le cas de l'application au système de lecture de caractères codées en CMC7 les deux voies de traitement sont agencées pour appliquer le règle d'identification des deux types d'intervalles, rappelée ci-dessus. Le dispositif de l'invention comporte quatre circuits de commutation à seuil dont deux sont réglés sur un seuil bas et deux sont réglés sur un seuil haut. Chaque entrée est reliée à deux circuits de commutation à seuil réglés respectivement sur un seuil haut et sur un seuil bas. Ainsi, l'entrée EA du dispositif est reliée aux entrées de deux circuits de commutation SAb (à seuil bas) et SAh (à seuil haut). L'entrée EB est quant à elle reliée aux entrées des deux circuits de commutation SBb (à seuil bas) et SBh (à seuil haut). En outre, les deux circuits SAb et SAh pilotent une bascule bistable BA par, l'intermédiaire d'un circuit combinatoire CA comportant, dans l'exemple décrit, une première porte NON-ET NA1, une deuxième porte NON-ET NA2 et un inverseur IA.

De façon analogue, les deux circuits SBb et SBh pilotent une bascule bistable BB par l'intermédiaire d'un circuit combinatoire CB comportant, dans l'exemple décrit, une première porte NON-ET NB1, une deuxième porte NON-ET NB2 et un inverseur IB.

Les bascules BA et BB qui sont représentées sur le schéma de la figure 1 sont du genre de celles qui l'on désigne communément sous le nom de bascule "dual-JK". Dans l'exemple décrit, ces bascules, qui sont réalisées suivant la technologie T.T.L. bien connue, sont du type de celles qui sont vendues sous la référence SN 74 LS 109 par la société américaine dite "Texas Instrument Corp". On rappellera simplement que le fonctionnement de ces bascules peut être résumé par la table de vérité suivante:

| Entrées | | | Sorties | | Conclusions |
|---|---|---|---|---|---|
| S | R | H | Q | $\overline{Q}$ | ' |
| 1 | 0 | — | 0 | 1 | Affichage à 0 |
| 0 | 1 | — | 1 | 0 | Affichage à 1 |
| 0 | 0 | — | 1 | 1 | Etat instable |
| 1 | 1 | O | $Q^-$ | $\overline{Q}^-$ | Pas de changement |
| 1 | 1 | I | $\overline{Q}^-$ | $Q^-$ | Commutation |

Il est utile de signaler ici que la structure du dispositif représenté sur la figure 1 est telle que, au cours du fonctionnement, les conditions conduisant à un état instable de la bascule ne sont jamais réalisées.

Sur la figure 1, les bascules BA et BB sont représentées avec leurs entrées et sorties normalisées (R, S, H, Q), les sorties SA et SB coïncidant avec les sorties Q respectives des bascules BA et BB. En outre, lesdites premières portes NA1, NB1 de chaque circuit combinatoire ont chacune deux entrées dont la première (1) est reliée à la sortie du circuit de commutation à seuil bas correspondant (c'est-à-dire SAb, SBb, respectivement) et dont la seconde (2) entrée est reliée à l'autre sortie du dispositif, c'est-à-dire celle qui ne correspond pas à la bascule bistable pilotée par le circuit combinatoire auquel appartient la porte NON-ET. Ainsi, la seconde entrée de la porte NA1 est reliée à la sortie SB et ladite seconde entrée de la porte NB1 est reliée la sortie SA. La porte NA1 (respectivement NB1) est l'élément essentiel du circuit combinatoire CA (respectivement CB). Dans l'exemple représenté, il s'agit d'une porte NON-ET, mais les circuits combinatoires pourraient être conçus, de manière équivalente soit avec de simples portes ET, associées à des circuits inverseurs connectés chacun à la sortie d'une porte ET, soit encore avec des portes OU associées à des circuits inverseurs montés chacun sur l'une des deux entrées de chaque porte OU, le but étant de réaliser au moins les produits logiques $\overline{SAb \cdot SB}$ et $\overline{SBb \cdot SA}$. La sortie de la porte NA1 (qui constitue aussi une sortie du circuit combinatoire CA) est reliée à la première entrée de forçage S de la bascule BA et la sortie de la porte NB1 est reliée à la première entrée de forçage S de la bascule BB. La sortie du circuit SAh est reliée à l'entrée d'horloge H de la bascule BA et la sortie du circuit SBh est reliée à l'entrée d'horloge H de la bascule BB.

Les portes NA2 et NB2 ont également deux entrées chacune, une première entrée de la porte NA2 étant connectée à la sortie du circuit de commutation SAb et une première entrée de la porte NB2 étant connectée à la sortie du circuit de commutation SBb. La seconde entrée de la porte NA2 et la seconde entrée de la porte NB2 sont toutes deux connectées à une source RAZ d'impulsions de remise à zéro, ces impulsions correspondant par exemple à une période de lecture du document. Dans l'exemple décrit, cette source RAZ est établie pour appliquer en permanence un niveau logique 1 sur les secondes entrées des portes NA2 et NB2, sauf cependant pendant les brefs instants où une remise à zéro est effectuée.

La sortie de la porte NA2 est reliée à la seconde entrée de forçage R de la bascule BA, par l'intermédiaire de l'inverseur IA tandis que la sortie de la porte NB2 est reliée à la seconde entrée de forçage R de la bascule BB par intermédiaire de l'inverseur IB. Comme il ressort des lettres de référence R et S utilisées conformément à la normalisation pour désigner les entrées des bascules BA et BB, les premières entrées de forçage précitées sont évidemment des entrées de positionnement tandis que les secondes entrées de forçage précitées sont des entrées de remise à zéro.

Sur la figure 2, on a représenté un chronogramme illustrant le fonctionnement de la partie du dispositif de la figure 1 dont le rôle est de traiter le signal analogique pseudopériodique engendré par la magnétorésistance A, c'est-à-dire le sous-ensemble comprenant les deux circuits de commutation SAb et SAh, le circuit combinatoire CA et la bascule BA. Il est bien évident que le sous-ensemble formé des circuits SBb, SBh, CB et de la bascule BB effectuera un traitement analogue du signal pseudopériodique engendré par la magnétorésistance B.

Pour chaque alternance significative du signal pseudopériodique engendré par la magnétorésistance A, les circuits SAb et SAh engendrent deux impulsions à fronts raides respectives, représentées sur la figure 2. Comme indiqué précédemment, ces impulsions sont engendrées par commutations entre deux niveaux de tension, lesquelles commutations sont commandées par le signe de la différence entre la valeur instantanée du signal analogique et le seuil (bas ou haut) prédéterminé. On engendre ainsi deux séries d'impulsions distinctes à partir du même signal analogique issu de la magnétorésistance A. Comme cela résulte avec évidence du fonctionnement d'un circuit de commutation à seuil décrit ci-dessus, chaque impulsion de la série associée au seuil bas (SAb sur la figure 2) est amorcée avant l'apparition de l'impulsion analogue (SAh) de la série associée au seuil haut et persiste après la disparition de cette dernière. A partir de ces deux impulsions, deux cas sont possibles illustrés respectivement par les parties gauche et droite du chronogramme de la figure 2.

*Premier cas:* si l'impulsion transmise à la sortie SB est déjà présente au moment de l'apparition du front avant (c'est-à-dire le premier front apparaissant dans le temps) de l'impulsion issue du circuit SAb, l'impulsion générée à la sortie SA commence en même temps que ce front avant et se termine en même temps que le front arrière de cette même impul- -sion, issue du circuit SAb.

*Second cas:* si l'impulsion transmise à la sortie SB n'est pas présente au moment de l'apparition du front avant de l'impulsion issue du circuit SAb, l'impulsion générée à la sortie SA commence en même temps que le front avant de l'impulsion issue du circuit SAh et se termine en même temps que le front arrière de impulsion, issue du circuit SAb.

C'est en effet ce que réalise le dispositif de la *figure 1*. La porte NA1 réalise le produit logique SAb·SB et déclenche la bascule BA lorsque les conditions du premier cas énoncé ci-dessus sont réalisées; la disparition de l'impulsion à la sortie du circuitr SAb inversant les niveaux logiques aux entrées de forçage S et R et remanant la bascule BA dans son état logique antérieur. En revanche, si la bascule BA n'est pas déclenchée par la condition $\overline{SAb·SB}$, elle le sera un peu plus tard par le front avant de l'impulsion issue du circuit SAh qui est appliquée à l'entrée d'horloge H de la bascule BA. Il est à remarquer que l'impulsion issue de la bascule SB et qui est représentée sur le chronogramme de la figure 2 est elle-même une impulsion ayant subi un traitement analogue par l'intermédiaire des circuits de commutation SBb, SBh, du circuit combinatoire CB et de la bascule BB.

Bien entendu, l'invention n'est nullement limitée au mode de réalisation qui vient d'être décrit, elle comprend tous les équivalents techniques des moyens mis en jeu si ceux-ci le sont dans le cadre des revendications que suivent. C'est ainsi, par exemple, que la porte NA1 qui est constituée, dans l'exemple décrit, par un circuit NON-ET, pourrait être remplacée par un circuit ET relicé par l'intermédiaire d'un inverseur, à l'entrée de forçage S de la bascule BA——De même, l'ensemble constitué par la porte NON-ET NA 2 et par l'inverseur IA pourrait être remplacé par un simple circuit ET.

**Revendications**

1. Procédé d'élaboration et de traitement d'impulsions représentatives d'informations, lesdites impulsions étant générées à partir de deux sources (A, B) de signal analogique pseudopériodique distinctes et transmises sur deux voies de traitement numérique en vue d'appliquer des règles de comparaison et/ou de coïncidence entre les impulsions des deux voies et en déduire lesdites informations, du type dans lequel deux séries d'impulsions distinctes, transmises chacune sur l'une respective desdites voies, sont engendrées, à partir d'un signal analogique précité respectif, par commutations entre deux niveaux de tension, ces commutations étant commandées par le signe de la différence entre la valeur instantanée de chaque alternance significative dudit signal analogique et l'un respectif de deux seuils prédéterminés associés chacun à l'une respective desdites voies, l'un de ces seuils étant un seuil haut et l'autre étant un seuil bas, chaque impulsion de la série associée au seuil bas étant ainsi engendrée avant l'impulsion analogique de la série associée au seuil haut et persistant après la disparition de ladite impulsion analogique, ledit procédé étant caractérisé en ce que, sur chaque voie, on génère une impulsion pour chaque couple d'impulsions desdites deux séries pendant un intervalle de temps commençant, soit avec le front avant de l'impulsion du couple associée au seuil bas si ce front est engendré pendant la présence d'une impulsion sur l'autre voie, soit avec le front avant de l'impulsion dudit couple associée au seuil haut dans le cas contraire, et se terminant toujours avec le front arrière de l'impulsion de ce couple qui est associée au seuil bas.

2. Procédé selon la revendication 1, caractérisé en ce que chaque impulsion sur chaque voie est engendrée en mémorisant un niveau de tension pendant l'intervalle de temps précité.

3. Dispositif d'élaboration et de traitement d'impulsions représentatives d'informations pour la mise en oeuvre du procédé selon la revendication 1, caractérisé en ce que ledit dispositif a deux entrées (EA,EB) connectées à deux sources de signal analogique (A,B) pseudopériodique distinctes et deux sorties (SA,SB) destinées à être reliées a deux voies de traitement numérique conçues pour appliquer des règles de comparaison et/ou de coïncidence entre les impulsions transmises sur les deux voies et en déduire lesdites informations, que l'une des deux entrées (EA) de ce dispositif est reliée à deux circuits de commutation à seuil (SAb; SAh) réglés respectivement sur un seuil (SAh) haut et un seuil (SAb) bas, que la sortie du circuit de commutation à seuil haut (SAh) est reliée à une entrée d'horloge (H) d'un moyen formant bascule bistable (BA), que la sortie du circuit de commutation à seuil bas (SAb) est reliée, d'une part à une première entrée (1) d'une première porte (NA1), du type NON-ET à deux entrées, d'autre part à une première entrée d'une seconde porte (NA2), du type NON-ET à deux entrées, que la sortie de cette première porte (NA1) est reliée à une entrée de forçage (S) dudit moyen formant bascule bistable (BA), que la sortie de cette seconde porte (NA2) est reliée, par l'intermédiaire d'un inverseur (IA), à une entrée de remise à zéro (R) dudit moyen formant bascule bistable (BA), que l'autre entrée de cette seconde porte (NA2) est reliée à une source d'impulsions de remise à zéro générale (RAZ), ces deux portes (NA1 et NA2) et cet inverseur (IA) constituant un circuit combinatoire (CA), une sortie (Q) dudit moyen formant bascule bistable (BA) étant reliée à l'une (SA) des deux sorties précitées destinées à être reliées auxdites voies de traitement numérique, tandis que l'autre (SB) de ces deux sorties est reliée à la seconde entrée (2) de ladite première port (NA1), et que l'autre entrée (B) dudit dispositif est aussi reliée à deux autres circuits de commutation à seuil (SBb, SBh) reliés à un autre circuit combinatoire (CB) et à un autre moyen formant bascule bistable (BB), interconnectés de façon analogue.

**Patentansprüche**

1. Verfahren zur Erzeugung und Verarbeitung von Informationen darstellenden Impulsen, die ausgehend von zwei verschiedenen, pseudoperiodischen Analogsignal-Quellen (A, B) erzeugt werden und auf zwei digitalen Verarbeitungskanälen übertragen werden, um Vergleichs- und/oder Koinzidenzregeln zwischen den Impulsen der zwei Kanäle anzuwenden und daraus die genannten Informationen abzuleiten, desjenigen Typs, bei dem zwei unterschiedliche Impulsserien, die jeweils auf einem der Kanäle übertragen werden, aus jeweils einem der genannten Analogsignale erzeugt werden durch Umschaltungen zwischen zwei Spannungspegeln, wobei diese Umschaltungen gesteuert werden durch das Vorzeichen der Differenz zwischen dem Momentanwert jeder bedeutsamen Halbperiode des Analogsignals und jeweils einem von zwei vorbestimmten Schwellwerten, die jeweils einem der Kanäle zugeordnet sind, wobei einer dieser Schwellwerte ein hoher Schwellwert und der andere ein niedriger Schwellwert ist, wobei jeder dem niedrigen Schwellwert zugeordnete Impuls der Serie auf diese Weise vor dem analogen Impuls der Serie, der dem hohen Schwellwert zugeordnet ist, erzeugt wird und nach dem Verschwinden des analogen Impulses fortdauert, und wobei das Verfahren dadurch gekennzeichnet ist, daß in jedem Kanal ein Impuls für jedes Impulspaar der beiden Serien während eines Zeitintervalls erzeugt wird, das entweder mit der Vorderflanke des dem niedrigen Schwellwert zugeordneten Impulses des Paares, wenn diese Flanke während des Vorhandenseins eines Impulses auf dem anderen Kanal erzeugt wird, oder mit der Vorderflanke des dem hohen Schwellwert zugeordneten Impulses des Paares im entgegengesetzten Fall beginnt und stets mit der Rückflanke des dem niedrigen Schwellwert zugeordneten Impulses dieses Paares endet.

2. Verfahren nach Anspruch 1, dadurch gekennzeichnet, daß jeder Impuls in jedem Kanal erzeugt wird, indem ein Spannungspegel während des genannten Zeitintervalles gespeichert wird.

3. Vorrichtung zur Erzeugung und Verarbeitung von Informationen darstellenden Impulsen für die Durchführung des Verfahrens nach Anspruch 1, dadurch gekennzeichnet, daß die Vorrichtung zwei an zwei pseudoperiodische, verschiedene Analogsignal-Quellen (A, B) angeschlossene Eingänge (EA, EB) und zwei Ausgänge (SA, SB) aufweist, die dazu bestimmt sind, mit zwei digitalen Verarbeitungskanälen verbunden zu werden, welche derart ausgelegt sind, daß sie Vergleichs- und/oder Koinzidenzregeln zwischen den auf den beiden Kanälen übertragenen Impulsen anwenden und daraus die genannten Informationen ableiten, daß einer der zwei Eingänge (EA) dieser Vorrichtung mit zwei Schwellwert-Schaltkreisen (SAb; SAh) verbunden ist, von denen die eine auf einen hohen Schwellwert (SAh) und die andere auf einen niedrigeren Schwellwert (SAb) eingestellt ist, daß der Ausgang des Schaltkreises für den hohen Schwellwert (SAh) mit einem Takteingang (H) einer Einrichtung verbunden ist, die eine bistabile Kippschaltung (BA) bildet, daß der Ausgang des Schaltkreises für den niedrigen Schwellwert (SAb) zum einen mit einem ersten Eingang (1) einer ersten Verknüpfungsschaltung (NA1) vom NAND-Typ mit zwei Eingängen und zum anderen mit einem ersten Eingang einer zweiten Verknüpfungsschaltung (NA2) von NAND-Typ mit zwei Eingängen verbunden ist, daß der Ausgang dieser ersten Verknüpfungsschaltung (NA1) mit einem Stelleingang S der die bistabile Kippschaltung (BA) bildenden Einrichtung verbunden ist, daß der Ausgang der zweiten Verknüpfungsschaltung (NA2) über einen Inverter (IA) mit einem Nullrückstelleingang (R) der eine bistabile Kippschaltung (BA) bildenden Einrichtung verbunden ist, daß der andere Eingang der zweiten Verknüpfungsschaltung (NA2) mit einer allgemeinen Nullrückstell-Impulsquelle (RAZ) verbunden ist, wobei diese beiden Verknüpfungsschaltungen (NA1 und NA2) und dieser Inverter (IA) eine Kombinationsschaltung (CA) bilden, wobei ein Ausgang (Q) der die bistabile Kippschaltung (BA) bildenden Einrichtung mit dem einen (SA) der beiden genannten Ausgänge verbunden ist, die dazu bestimmt sind, mit den digitalen Verarbeitungskanälen verbunden zu werden, während der andere (SB) dieser beiden Ausgänge mit einem zweiten Eingang (2) der ersten Verknüpfungsschaltung (NA1) verbunden ist, und daß der andere Eingang (B) der Vorrichtung ebenfalls mit zwei Schwellwert-Schaltkreisen (SBb, SBh) verbunden ist, die an eine weitere Kombinationsschaltung (CB) und an eine weitere, eine bistabile Kippschaltung (BB) bildende Einrichtung angeschlossen sind, welche in analoger Weise untereinander verbunden sind.

**Claims**

1. Method for producing and processing pulses representing data, the said pulses being generated by two separate sources (A,B) of pseudoperiodic analog signals, and transmitted on two digital processing channels for the purpose of applying comparison and/or coincidence rules between the pulses of the two channels and of thereby deducing the said data, of the type in which two separate series of pulses, each transmitted on one of the said channels, are generated on the basis of a corresponding aforesaid analog signal by switching operations between two voltage levels, these switching operations being controlled by the sign of the difference between the instantaneous value of each significant alternation of the said analog signal and the corresponding threshold of two predetermined thresholds of which each is associated with one of the channels in question, one of these thresholds being a high threshold and the other being a low threshold, each pulse of the series associated with the low threshold thus being generated before the analog pulse of the series associated with the high threshold and persisting after the disappearance of the said analog pulse, the said method being characterised in that, on each channel, a pulse is generated for each pair of pulses of the said two series during a period of time starting either with the leading flank of the pulses of the said pair associated with the low threshold if this flank is generated during the presence of a pulse on the other channel, or with the leading flank of the pulse of the said pair associated with the high threshold in the contrary case, and terminating in each instance with the trailing flank of the pulse of this pair which is associated with the low threshold.

2. Method according to claim 1, characterised in that each pulse on the channel is generated whilst storing a voltage level during the aforesaid period of time.

3. Device for producing and processing pulses representative of data, for carrying out the method according to claim 1, characterised in that the said device has two inputs (EA,EB) connected to two separate pseudoperiodic analog signal sources (A,B), and two outputs (SA,SB) intended to be connected to two digital processing channels adapted for application of rules of comparison and/or coincidence between the pulses transmitted on the two channels and for deducing therefrom the said data, that one of the two inputs (EA) of this device is connected to two threshold switching circuits (SAb;SAh) which are calibrated, respectively, at a high threshold (SAh) and at a low threshold (SAb), that the output of the high threshold (SAh) switching circuit is connected to a clock input (H) of a device forming a bistable flipflop (BA), that the output of the low threshold switching circuit (SAb) is connected on the one hand to a first input (1) of a first gate (NA1) of the NAND type and having two inputs, on the other hand to a first input of a second gate (NA2) of the NAND type having two inputs, that the output of this first gate (NA1) is connected to a driving input (S) of the said device forming a bistable flipflop (BA), that the output of this second gate (NA2) is connected via an inverter (IA) to a zero reset input (R) of the said device forming a bistable flipflop (BA), that the other input of this second gate (NA2) is connected to a source of general zero reset pulses (RAZ), these two gates (NA1 and NA2) and this inverter (IA) forming a combinatory circuit (CA), an output (Q) of the said device forming a bistable flipflop (BA) being connected to the one (SA) of the two aforesaid outputs intended to be connected to the said digital processing channels, whilst the other (SB) of these two outputs is connected to the second input (2) of the said first gate (NA1) and that the other input (B) of the said device is also connected to two other threshold switching circuits (SBb,SBh) connected to another combinatory circuit (CB) and to another device forming a bistable flipflop (BB) interconnected in an analogous manner.

Fig. 2.

SAb

SAh

SB

SA

0012059